# EUROPÄISCHE PATENTSCHRIFT

(11) **EP 3 227 138 B1**
(45) Veröffentlichungstag und Bekanntmachung des Hinweises auf die Patenterteilung: **29.04.2020**
(21) Anmeldenummer: 15807630.7
(22) Anmeldetag: 04.12.2015
(51) Int. Cl.: B60N 2/75, B60N 2/70

(54) **FAHRZEUGKOMPONENTE UND VERFAHREN ZUM HERSTELLEN EINER FAHRZEUGKOMPONENTE**
VEHICLE COMPONENT AND METHOD FOR PRODUCING A VEHICLE COMPONENT
COMPOSANT DE VÉHICULE ET PROCÉDÉ FABRICATION DE CE COMPOSANT DE VÉHICULE

(30) Priorität: 05.12.2014 DE 102014225011
(43) Veröffentlichungstag der Anmeldung: 11.10.2017
(73) Patentinhaber: Adient Luxembourg Holding S.à r.l., 1855 Luxembourg (LU)
(72) Erfinder: VOLANEK, Peter, 91101 Trencin (SK)
(74) Vertreter: Loock, Jan Pieter
(86) Internationale Anmeldenummer: PCT/EP2015/078695
(87) Internationale Veröffentlichungsnummer: WO 2016/087655

(56) Entgegenhaltungen:
- EP-A1- 0 571 333
- EP-A2- 1 595 690
- US-B1- 6 468 450

## Beschreibung

### Stand der Technik

Die vorliegende Erfindung betrifft eine Fahrzeugkomponente, insbesondere eine Armlehne, und ein Verfahren zum Herstellen einer Fahrzeugkomponente.

Aus dem Stand der Technik sind Fahrzeugkomponenten, die ein Strukturteil und ein Verkleidungselement umfassen, hinlänglich bekannt. Beispielsweise handelt es sich bei der Fahrzeugkomponente um eine Armlehne und das Verkleidungselement ist die Außenhaut einer Polsterung. Typischerweise ist das besagte Strukturteile in die Polsterung eingelassen, um etwaigen Belastungen der Fahrzeugkomponente standzuhalten, ohne dass die Fahrzeugkomponente übermäßig deformiert oder sogar zerstört wird. Typischerweise werden diese Fahrzeugkomponenten, wie z. B. Armlehnen, hergestellt, indem man ein Füllelement zwischen das Verkleidungselement und das Strukturteil einfüllt und anschließend aushärten lässt. Das ausgehärtete schaumförmige Füllelement bildet dann in der Regel die Polsterung. Die EP 1 595 690 A2 offenbart einen gepolsterten Stützkörper für Kraftfahrzeuge, umfassend einen starren Rahmen und einen gepolsterten Körper, in dem der starre Rahmen zumindest teilweise untergebracht ist. Die US 6 468 450 B1 offenbart ein Verfahren zum Ausbilden einer Armlehne.

Auch wenn es nicht sichtbar an der Fahrzeugkomponente angeordnet ist, kann vom Strukturteil, insbesondere in einer Unfallsituation, ein gewisses Verletzungsrisiko ausgehen. Daher wird in der Regel streng darauf geachtet, dass das Strukturteil keine Kanten oder spitz zulaufende Konturen aufweist, die in der Unfallsituation das Gefährdungspotential erhöhen. Um das Gefährdungspotential zu senken, sieht es der Stand der Technik vor, das Strukturteil vor der Herstellung der Fahrzeugkomponente aufwendig umzuformen, um den erforderlichen Sicherheitsstandards zu genügen.

### Offenbarung der Erfindung

Es ist eine Aufgabe der vorliegenden Erfindung eine Fahrzeugkomponente bereitzustellen, die sich einfach herstellen lässt und gleichzeitig die erforderlichen Sicherheitsstandards erfüllt.

Die vorliegende Erfindung löst die Aufgabe durch eine Fahrzeugkomponente gemäß Anspruch 1.

Gegenüber dem Stand der Technik hat die erfindungsgemäße Fahrzeugkomponente den Vorteil der Schutzvorrichtung, mit der sich solche Bereiche des Strukturteils abdecken lassen, von denen ein gewisses Gefährdungspotenzial in der Unfallsituation ausgeht. Insbesondere lässt sich dabei auf ein aufwendiges Umformen des Strukturteils verzichten, mit dem andernfalls das Gefährdungspotential reduziert werden soll. Stattdessen wird das Gefährdungspotential durch die Schutzvorrichtung reduziert.

Vorzugsweise ist das Strukturteil vollständig in der Fahrzeugkomponente eingelassen und insbesondere nicht sichtbar für einen Passagier innerhalb des Verkleidungselements angeordnet. Weiterhin ist es vorgesehen, dass die Schutzvorrichtung unmittelbar am Strukturteil angeordnet ist. Dabei ist die Schutzvorrichtung lösbar oder unlösbar mit dem Strukturteil verbunden. Beispielsweise ist die Schutzvorrichtung über eine stoffschlüssige Verbindung unlösbar mit dem Strukturteil verbunden oder über ein Verklipsen lösbar mit dem Strukturteil verbunden. Weiterhin ist es vorgesehen, dass die Schutzvorrichtung eine zumindest teilweise gebogene bzw. gekrümmte Außenkontur bzw. Außenseite aufweist. Mittels der gebogenen bzw. gekrümmten Außenkontur lässt sich das Gefährdungspotential in vorteilhafter Weise reduzieren. Weiterhin ist es vorstellbar, dass das Strukturteil mittelbar mit einem Bauteil des Fahrzeugchassis oder einem Bauteil eines Fahrzeugsitzes verbunden ist.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer weiteren Ausführungsform der vorliegenden Erfindung ist vorgesehen, dass die Schutzvorrichtung eine Kante, eine Schnittgrat oder ein Stanzgrat des Strukturteils bedeckt, insbesondere vollständig abdeckt. Insbesondere erstreckt sich die Schutzvorrichtung zumindest teilweise über zwei Seitenflächen des Strukturteils und sorgt dadurch dafür, dass ein Kantenverlauf zwischen zwei benachbarten Seitenflächen abgeflacht und so das Verletzungsrisiko, das von der andernfalls scharfen Kante ausgeht, reduziert wird.

Gemäß einer weiteren Ausführungsform der vorliegenden Erfindung ist vorgesehen, dass die Schutzvorrichtung hülsenförmig ausgestaltet ist. Insbesondere ist es vorgesehen, dass die hülsenförmige Schutzvorrichtung eine Aufnahme aufweist, innerhalb der ein Teil des Strukturteils passgenau im montierten Zustand angeordnet ist. Vorzugsweise ist die Aufnahme passend zu einem eine Kante aufweisenden Bereich des Strukturteils ausgestaltet. Weiterhin ist es bevorzugt vorgesehen, dass die hülsenförmige Schutzvorrichtung im montierten Zustand auf das Strukturteil aufgezogen ist. Insbesondere bildet die Schutzvorrichtung eine Art Kappe bzw. Abschluss des Strukturteils.

Gemäß einer weiteren Ausführungsform der vorliegenden Erfindung ist vorgesehen, dass eine Außenseite der Schutzvorrichtung einen teilkreisförmigen Konturverlauf mit einem Radius, der größer ist als 3.2 mm oder 3.2 mm entspricht, aufweist. In anderen Worten: Die Außenseite der Schutzvorrichtung weist einen Bereich mit einem teilkreisförmigen Konturverlauf auf, wobei dem teilkreisförmigen Konturverlauf ein Radius zuzuordnen ist, der größer ist als 3.2 mm oder 3.2 mm entspricht. Dabei ist der Konturverlauf bevorzugt als Umfangsverlauf entlang einer Schnittfläche durch die Schutzvorrichtung zu verstehen. Ein teilkreisförmiger Konturverlauf mit einem Radius von 3.2 mm oder mehr stellt sicher, dass das Gefährdungsrisiko durch das Strukturteil auf ein gewünschtes Maß reduziert wird. Insbesondere weist die Schutzvorrichtung mehrere solche teilkreisförmige Konturverläufe auf, deren Radien alle größer sind als 3.2 mm, ohne dass die Radien untereinander übereinstimmen. Weiterhin ist es vorstellbar, dass die Außenseite der Schutzvorrichtung einen vollständig kreisförmigen Konturverlauf aufweist.

Gemäß einer weiteren Ausführungsform der vorliegenden Erfindung ist vorgesehen, dass das Strukturteil zumindest eine rohrförmige Teilkomponente umfasst, wobei die Schutzvorrichtung stirnseitig auf der rohrförmigen Teilkomponente angeordnet ist und/oder als Abschluss auf die rohrförmige Teilkomponente aufgesetzt ist. Insbesondere ist es vorgesehen, dass das Strukturteil mehrere rohrförmige Teilkomponenten umfasst, die benachbart zueinander in einer Ebene angeordnet sind und jeweils mit einer benachbarten rohrförmigen Teilkomponente entlang ihrer Längsachse stoffschlüssig verbunden sind, insbesondere verschweißt sind. Dabei sind zwei benachbarte rohrförmige Teilkomponenten vorzugsweise derart mit einer Schweißnaht verbunden, dass die Schweißnaht einer Kugel mit einem Durchmesser von 165 mm nicht zugänglich ist.

Gemäß einer weiteren Ausführungsform der vorliegenden Erfindung ist vorgesehen, dass das Strukturteil von dem Verkleidungselement beabstandet ist und insbesondere zwischen dem Verkleidungselement und dem Strukturteil ein Füllelement, vorzugsweise ein PU-Schaum, angeordnet ist. Dadurch können das Verkleidungselement und das Füllelement eine Polsterung für die Fahrzeugkomponente bilden. Insbesondere handelt es sich bei der Fahrzeugkomponente um eine in einem "Pour-in-place"-Prozess hergestellte Fahrzeugkomponente und/oder das Füllelement, insbesondere das ausgehärtete und/oder schaumartige Füllelement, ist formbestimmend für die Fahrzeugkomponente.

Gemäß einer weiteren Ausführungsform der vorliegenden Erfindung ist vorgesehen, dass das Strukturteil aus einem Metall und/oder die Schutzvorrichtung aus einem Kunststoff gefertigt ist. Durch die Verwendung von Metall als Material für das Strukturteil lässt sich in vorteilhafter Weise ein vergleichsweise belastbares Strukturteil bereitstellen. Die Verwendung von Schutzvorrichtungen aus Kunststoff vereinfacht die Realisierung der Abrundungen, mit denen das Gefährdungspotential reduziert wird, ohne dass das Gewicht der Fahrzeugkomponente signifikant erhöht wird.

Ein weiterer Gegenstand der vorliegenden Erfindung ist ein Verfahren zur Erzeugung einer Fahrzeugkomponente, insbesondere einer erfindungsgemäßen Fahrzeugkomponente, wobei in einem ersten Verfahrensschritt ein Strukturteil, vorzugsweise ein metallisches Strukturteil, bereitgestellt wird, wobei in einem zweiten Verfahrensschritt ein Bereich des Strukturteils mit einer Schutzvorrichtung, vorzugsweise einer Schutzvorrichtung aus Kunststoff, bedeckt wird und in einem dritten Verfahrensschritt das mit der Schutzvorrichtung bedeckte Strukturteil von einem Verkleidungselement umhüllt wird, dadurch gekennzeichnet, dass die Schutzvorrichtung so gestaltet ist, dass diese dafür sorgt, dass ein Kantenverlauf zwischen zwei benachbarten Seitenflächen abgeflacht ist und so das Verletzungsrisiko, das von der andernfalls scharfen Kante ausgeht, reduziert.

Gegenüber dem Stand der Technik hat das erfindungsgemäße Verfahren den Vorteil, dass zum Reduzieren des Gefährdungspotentials gezielt ein bestimmter Bereich des Strukturteils bedeckt wird. Insbesondere wird die Schutzvorrichtung dabei im zweiten Verfahrensschritt stoff-, form- und/oder kraftschlüssig mit dem Strukturteil verbunden, insbesondere lösbar oder unlösbar verbunden. Weiterhin ist es bevorzugt vorgesehen, dass mittels der Schutzvorrichtung die Form des Strukturteils zumindest bereichsweise abgeflacht wird. Dazu wird die Schutzvorrichtung bevorzugt im Bereich einer Kante des Strukturteils angeordnet. Insbesondere ist es vorgesehen, dass die Schutzvorrichtung an ihrer Außenseite einen Konturverlauf aufweist, der zumindest teilweise teilkreisförmig ist, wobei einem Bereich mit einem teilkreisförmigen Konturverlauf ein Radius zugeordnet ist, der mindestens 3.2 mm beträgt. Insbesondere weist die Schutzvorrichtung mehrere solche Bereiche auf, deren Radien alle größer sind als 3.2 mm, ohne dass die Radien untereinander übereinstimmen.

Gemäß einer weiteren Ausführungsform der vorliegenden Erfindung ist vorgesehen, dass in einem vierten Verfahrensschritt ein Füllelement, vorzugsweise ein schaumförmiges Füllelement, wie beispielsweise PU-Schaum, zwischen das Verkleidungselement und das Strukturteil eingelassen wird. Vorzugsweise wird zur Herstellung der Fahrzeugkomponente, insbesondere der Armlehne, ein "Pour-in-place"-Prozess verwendet. Dazu wird das Füllelement in flüssiger Form zwischen das Strukturteil und das Verkleidungselement eingelassen. Durch die anschließende Polymerisierung härtet der Füllelement aus und gibt ausgehärtet die Form der Fahrzeugkomponente vor.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

### Kurze Beschreibung der Figuren

Die **Figur 1** zeigt einen Teil einer Fahrzeugkomponente gemäß einer beispielhaften Ausführungsform der vorliegenden Erfindung in einem demontierten Zustand.

Die **Figur 2** zeigt einen Teil einer Fahrzeugkomponente gemäß einer beispielhaften Ausführungsform der vorliegenden Erfindung in einem montierten Zustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

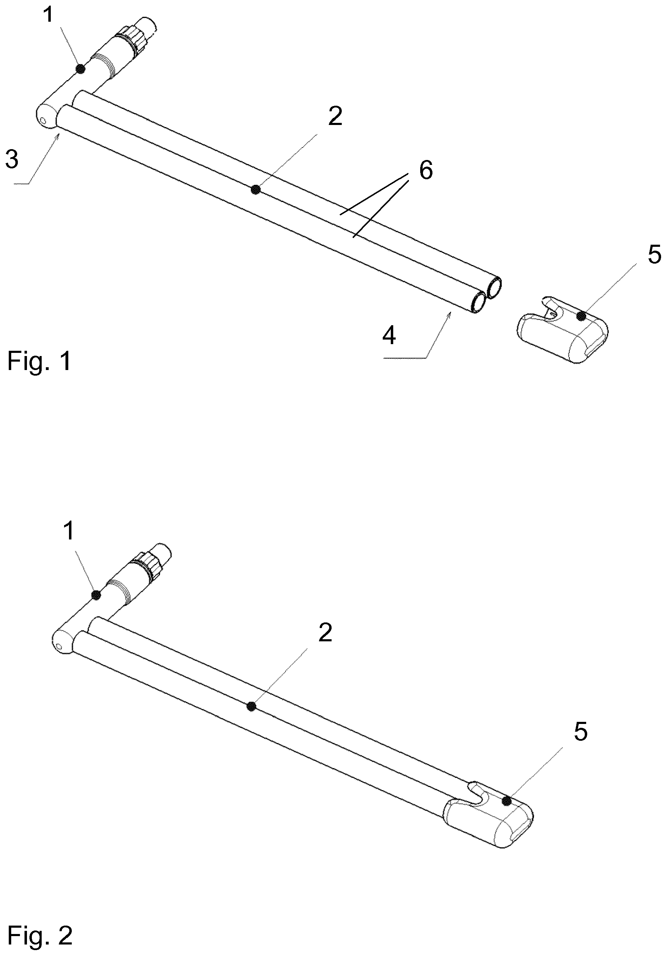

In **Figur 1** ist ein Teil einer Fahrzeugkomponente gemäß einer beispielhaften Ausführungsform der vorliegenden Erfindung in einem demontierten Zustand dargestellt. Insbesondere handelt es sich bei der Fahrzeugkomponente um eine schwenkbare Armlehne, die beispielsweise ein Teil einer Mittelkonsole und/oder eine Rückenlehne ist. Insbesondere umfasst die Fahrzeugkomponente ein, vorzugsweise metallisches, Strukturteil 2, das von einem Verkleidungselement (hier nicht dargestellt) umgeben bzw. ummantelt ist. Zwischen dem Strukturteil 2 und dem Verkleidungselement ist vorzugsweise zur Polsterung und Formgebung ein schaumartiges Füllelement (hier nicht dargestellt), insbesondere ein PU-Schaum, angeordnet. Vorzugsweise ist es vorgesehen, dass die Fahrzeugkomponente durch einen "Pour in place"-Prozess gefertigt ist, d. h. das Füllelement wird in flüssiger Form zwischen das Strukturteil 2 und das Verkleidungselement eingelassen bzw. eingespritzt und durch eine anschließende Polymerisierung nimmt das Füllelement seine endgültige Form an und gibt so schließlich die Form für die Fahrzeugkomponente vor. Dabei ist das Strukturteil 2 insbesondere innerhalb der Verkleidung bzw. des Füllelements angeordnet. In der dargestellten Ausführungsform umfasst das Strukturteil 2 zwei aneinander geschweißte rohrförmige Teilkomponenten 6, die entlang ihrer Längsseite miteinander verschweißt sind. Vorstellbar ist auch, dass mehrere rohrförmige Teilkomponenten 6 miteinander stoffschlüssig verbunden sind. Insbesondere sind die rohrförmigen Teilkomponenten 6 an ihrer Unterseite miteinander verschweißt. Dabei ist es vorzugsweise vorgesehen, dass eine durch das Verschweißen entstandene Schweißnaht nicht zugänglich ist für eine Kugel mit einem Durchmesser von 165 mm. Insbesondere bilden die beiden zusammengeschweißten rohrförmigen Teilkomponenten eine Art Doppelrohr. Weiterhin ist es vorgesehen, dass dieses Doppelrohr mit einer seiner Stirnseiten, insbesondere in einem Anschlussbereich 3, an einen Schaft 1 angeschweißt ist, wobei der Schaft 1 beispielsweise im Falle der Armlehne eine Drehachse zum Verschenken der Armlehne bildet. Dem Anschlussbereich 3 gegenüberliegend weist das Doppelrohr einen Öffnungsbereich 4 auf. Die im Öffnungsbereich 4 zu findenden Kanten können in einer Unfallsituation eine Gefahrenquelle bilden und sind daher abzurunden. Insbesondere ist hier vorgesehen, dass eine Schutzvorrichtung 5 den Öffnungsbereich 4 verkleidet, wobei die Schutzvorrichtung 5 durch seine zumindest teilweise abgerundete Außenseite für das gewünschte Abrunden im Kantenbereich des Strukturteils 2 sorgt. Dazu ist die Schutzvorrichtung 5 vorzugsweise hülsenförmig ausgestaltet, wobei die hülsenförmige Schutzvorrichtung eine komplementär zum Strukturteil 2 ausgestaltete Aufnahme, in der die Stirnseite des Strukturteils 2 im montierten Zustand vorzugsweise passgenau angeordnet ist, aufweist. Im Sinne eines Schlüssel-Schloss-Prinzips ist die hülsenförmige Schutzvorrichtung 5 dann so auf das Strukturteil 2 aufsetzbar bzw. aufschiebbar, dass die Schutzvorrichtung 5 im montierten Zustand das Strukturteil 2 an dessen Stirnseite abschließt, insbesondere einen kappenartigen Abschluss bildet. Weiterhin ist dabei vorgesehen, dass eine Außenkontur der Schutzvorrichtung 5 zumindest teilweise teilkreisförmig ausgebildet ist, d. h. ein äußerer Umfang eine Schnittfläche durch die Schutzvorrichtung 5, ist zumindest teilweise teilkreisförmig. Insbesondere ist einem teilkreisförmigen Bereich der Schutzvorrichtung 5 ein Radius zugeordnet, der größer ist als 3.2 mm. Dadurch lässt sich eine Abflachung im Öffnungsbereich 4 des Strukturteils 2 erzielen, durch die das Verletzungsrisiko durch das Strukturteil 5 bei einem Unfall in vorteilhafter Weise reduziert wird.

In **Figur 2** ist ein Teil einer Fahrzeugkomponente gemäß einer beispielhaften Ausführungsform der vorliegenden Erfindung in einem montierten Zustand dargestellt. Dabei ist die Schutzvorrichtung 5 auf einer der Stirnseiten 2 aufgestülpt und bedeckt den sonst frei liegenden Kantenbereich. Weiterhin ist es vorstellbar, dass die Schutzvorrichtung 5 mit dem Strukturteil 2 stoff-, form- und/oder kraftschlüssig verbunden wird. Beispielsweise wird die Schutzvorrichtung 5 nach dem Aufstülpen mit dem Strukturteil 2 verschweißt oder die Schutzvorrichtung 5 wird mit dem Strukturteil 2 verklipst.

### Bezugszeichenliste

- 1: Schaft
- 2: Strukturteil
- 3: Anschlussbereich
- 4: Öffnungsbereich
- 5: Schutzvorrichtung
- 6: rohrförmige Teilkomponente

## Patentansprüche

1. Fahrzeugkomponente, insbesondere eine Armlehne, die ein Strukturteil (2) und ein das Strukturteil (2) zumindest teilweise umgebendes Verkleidungselement aufweist, wobei das Strukturteil (2) zumindest teilweise von einer Schutzvorrichtung (5) bedeckt ist, **dadurch gekennzeichnet, dass** die Schutzvorrichtung (5) so gestaltet ist, dass diese dafür sorgt, dass ein Kantenverlauf zwischen zwei benachbarten Seitenflächen abgeflacht ist und so das Verletzungsrisiko, das von der andernfalls scharfen Kante ausgeht, reduziert.

2. Fahrzeugkomponente nach Anspruch 1, wobei das Strukturteil (2) vollständig innerhalb des Verkleidungselements angeordnet ist.

3. Fahrzeugkomponente nach einem der vorhergehenden Ansprüche, wobei die Schutzvorrichtung (5) unmittelbar am Strukturteil (2) angeordnet ist.

4. Fahrzeugkomponente nach einem der vorhergehenden Ansprüche, wobei die Schutzvorrichtung (5) eine zumindest teilweise gebogene und/oder gekrümmte Außenkontur aufweist.

5. Fahrzeugkomponente nach einem der vorhergehenden Ansprüche, wobei die Schutzvorrichtung (5) eine Kante, eine Schnittgrat und/oder ein Stanzgrat des Strukturteils (2) bedeckt.

6. Fahrzeugkomponente nach einem der vorhergehenden Ansprüche, wobei die Schutzvorrichtung (5) hülsenförmig ausgestaltet ist.

7. Fahrzeugkomponente nach Anspruch 6, wobei die hülsenförmige Schutzvorrichtung (5) eine Aufnahme aufweist, innerhalb derer ein Teil des Strukturteil (2) passgenau im montierten Zustand angeordnet ist.

8. Fahrzeugkomponente nach einem der vorhergehenden Ansprüche, wobei eine Außenseite der Schutzvorrichtung (5) einen teilkreisförmigen Konturverlauf mit einem Radius, der größer ist als 3.2 mm oder 3.2 mm entspricht, aufweist.

9. Fahrzeugkomponente nach einem der vorhergehenden Ansprüche, wobei das Strukturteil (2) zumindest eine rohrförmige Teilkomponente (6) umfasst, wobei die Schutzvorrichtung (5) stirnseitig auf der rohrförmigen Teilkomponente (6) angeordnet ist und/oder als Abschluss auf die rohrförmige Teilkomponente (6) aufgesetzt ist.

10. Fahrzeugkomponente nach einem der vorhergehenden Ansprüche, wobei das Strukturteil (2) von dem Verkleidungselement beabstandet ist und insbesondere zwischen dem Verkleidungselement und dem Strukturteil (2) ein Füllelement, vorzugsweise ein PU-Schaum, angeordnet ist.

11. Fahrzeugkomponente nach einem der vorhergehenden Ansprüche, wobei das Strukturteil (2) aus einem Metall und/oder die Schutzvorrichtung (5) aus einem Kunststoff gefertigt ist.

12. Verfahren zur Erzeugung einer Fahrzeugkomponente nach einem der vorhergehenden Ansprüche, wobei in einem ersten Verfahrensschritt ein Strukturteil (2), vorzugsweise ein metallisches Strukturteil (2), bereitgestellt wird, wobei in einem zweiten Verfahrensschritt ein Bereich des Strukturteils (2) mit einer Schutzvorrichtung (5), vorzugsweise einer Schutzvorrichtung (5) aus Kunststoff, bedeckt wird und in einem dritten Verfahrensschritt das mit der Schutzvorrichtung (5) bedeckte Strukturteil (2) von einem Verkleidungselement umhüllt wird, **dadurch gekennzeichnet, dass** die Schutzvorrichtung (5) so gestaltet ist, dass diese dafür sorgt, dass ein Kantenverlauf zwischen zwei benachbarten Seitenflächen abgeflacht ist und so das Verletzungsrisiko, das von der andernfalls scharfen Kante ausgeht, reduziert.

13. Verfahren nach Anspruch 12, wobei in einem vierten Verfahrensschritt ein Füllelement, vorzugsweise ein schaumförmiges Füllelement, wie beispielsweise PU-Schaum, zwischen das Verkleidungselement und das Strukturteil (2) eingelassen wird.

## Claims

1. Vehicle component, in particular an armrest, which has a structural part (2) and a trim element which surrounds the structural part (2) at least partially, the structural part (2) being covered at least partially by a protective apparatus (5), the protective apparatus (5) is designed in such a way that it ensures that an edge contour between two adjacent side faces is flattened and thus reduces the risk of injury which stems from the otherwise sharp edge.

2. Vehicle component according to Claim 1, the structural part (2) being arranged completely within the trim element.

3. Vehicle component according to either of the preceding claims, the protective apparatus (5) being arranged directly on the structural part (2).

4. Vehicle component according to one of the preceding claims, the protective apparatus (5) having an at least partially bent and/or curved outer contour.

5. Vehicle component according to one of the preceding claims, the protective apparatus (5) covering an edge, a burr and/or a punching burr of the structural part (2).

6. Vehicle component according to one of the preceding claims, the protective apparatus (5) being of sleeve-shaped configuration.

7. Vehicle component according to Claim 6, the sleeve-shaped protective apparatus (5) having a receptacle, within which a part of the structural part (2) is arranged with an accurate fit in the mounted state.

8. Vehicle component according to one of the preceding claims, an outer side of the protective apparatus (5) having a contour profile in the shape of a partial circle with a radius which is greater than 3.2 mm or corresponds to 3.2 mm.

9. Vehicle component according to one of the preceding claims, the structural part (2) comprising at least one tubular part component (6), the protective apparatus (5) being arranged on the end side on the tubular part component (6) and/or being placed onto the tubular part component (6) as a termination.

10. Vehicle component according to one of the preceding claims, the structural part (2) being spaced apart from the trim element, and a filling element, preferably a PU foam, being arranged, in particular, between the trim element and the structural part (2).

11. Vehicle component according to one of the preceding claims, the structural part (2) being produced from a metal and/or the protective apparatus (5) being produced from a plastic.

12. Method for producing a vehicle component according to one of the preceding claims, a structural part (2), preferably a metallic structural part (2), being provided in a first method step, a region of the structural part (2) being covered by way of a protective apparatus (5), preferably a protective apparatus (5) made from plastic, in a second method step, and the structural part (2) which is covered by way of the protective apparatus (5) being encased by a trim element in a third method step, **characterized in that** the protective apparatus (5) is designed in such a way that it ensures that an edge contour between two adjacent side faces is flattened and thus reduces the risk of injury which stems from the otherwise sharp edge.

13. Method according to Claim 12, a filling element, preferably a foam-like filling element, such as for example PU foam, being embedded between the trim element and the structural part (2) in a fourth method step.

## Revendications

1. Composant de véhicule, notamment un accoudoir, qui possède une pièce structurelle (2) et un élément d'habillage qui entoure au moins partiellement la pièce structurelle (2),
la pièce structurelle (2) étant au moins partiellement recouverte par un dispositif de protection (5), **caractérisé en ce que** le dispositif de protection (5) est configuré de telle sorte qu'il contribue à ce que le tracé d'une arête entre deux surfaces latérales voisines est aplati et réduit ainsi le risque de blessure qui résulte d'arêtes qui seraient sinon acérées.

2. Composant de véhicule selon la revendication 1, la pièce structurelle (2) étant disposée entièrement à l'intérieur de l'élément d'habillage.

3. Composant de véhicule selon l'une des revendications précédentes, le dispositif de protection (5) étant disposé directement sur la pièce structurelle (2).

4. Composant de véhicule selon l'une des revendications précédentes, le dispositif de protection (5) possédant un contour extérieur au moins partiellement coudé et/ou curviligne.

5. Composant de véhicule selon l'une des revendications précédentes, le dispositif de protection (5) recouvrant une arête, une bavure de coupe et/ou une bavure d'estampage de la pièce structurelle (2).

6. Composant de véhicule selon l'une des revendications précédentes, le dispositif de protection (5) étant réalisé en forme de manchon.

7. Composant de véhicule selon la revendication 6, le côté extérieur du dispositif de protection (5) possédant un logement à l'intérieur duquel une partie de la pièce structurelle (2) est disposée avec un ajustement précis à l'état monté.

8. Composant de véhicule selon l'une des revendications précédentes, un côté extérieur du dispositif de protection (5) présentant un tracé de contour partiellement circulaire avec un rayon qui est supérieur à 3,2 mm ou correspond à 3,2 mm.

9. Composant de véhicule selon l'une des revendications précédentes, la pièce structurelle (2) comportant au moins un composant partiel (6) tubulaire, le dispositif de protection (5) étant disposé du côté frontal sur le composant partiel (6) tubulaire et/ou étant posé sur le composant partiel (6) tubulaire en tant que terminaison.

10. Composant de véhicule selon l'une des revendications précédentes, la pièce structurelle (2) étant espacée de l'élément d'habillage et un élément de remplissage, de préférence une mousse PU, étant notamment disposé entre l'élément d'habillage et la pièce structurelle (2).

11. Composant de véhicule selon l'une des revendications précédentes, la pièce structurelle (2) étant fabriquée en un métal et/ou le dispositif de protection (5) étant fabriqué en une matière plastique.

12. Procédé de production d'un composant de véhicule selon l'une des revendications précédentes, une pièce structurelle (2), de préférence une pièce structurelle métallique (2), étant fournie dans une première étape, une zone de la pièce structurelle (2) étant recouverte par un dispositif de protection (5), de préférence un dispositif de protection (5) en matière plastique, dans une deuxième étape et, dans une troisième étape, la pièce structurelle (2) recouverte par le dispositif de protection (5) étant enveloppée par un élément d'habillage, **caractérisé en ce que** le dispositif de protection (5) est configuré de telle sorte qu'il contribue à ce que le tracé d'une arête entre deux surfaces latérales voisines est aplati et réduit ainsi le risque de blessure qui résulte d'arêtes qui seraient sinon acérées.

13. Procédé selon la revendication 12, un élément de remplissage, de préférence un élément de remplissage en forme de mousse, par exemple une mousse PU, étant, dans une quatrième étape, incorporé entre l'élément d'habillage et la pièce structurelle (2).
